**Europäisches Patentamt**

**European Patent Office**

**Office européen des brevets**

(19)

(11) Veröffentlichungsnummer : **0 486 813 B1**

(12) **EUROPÄISCHE PATENTSCHRIFT**

(45) Veröffentlichungstag der Patentschrift :
**01.06.94 Patentblatt 94/22**

(51) Int. Cl.$^5$ : **C01B 25/32**

(21) Anmeldenummer : **91117625.3**

(22) Anmeldetag : **16.10.91**

(54) **Verfahren zur Herstellung von wässrigen Suspensionen von Hydroxylapatit.**

(30) Priorität : **22.11.90 DE 4037103**

(43) Veröffentlichungstag der Anmeldung :
**27.05.92 Patentblatt 92/22**

(45) Bekanntmachung des Hinweises auf die
Patenterteilung :
**01.06.94 Patentblatt 94/22**

(84) Benannte Vertragsstaaten :
**AT BE CH DE DK ES FR GB GR IT LI LU NL SE**

(56) Entgegenhaltungen :
**US-A- 4 274 879**
**US-A- 4 324 772**
**US-A- 4 849 194**

(73) Patentinhaber : **BK LADENBURG GmbH,**
**Gesellschaft für chemische Erzeugnisse**
**Dr.-Albert-Reimann-Strasse 2**
**D-68526 Ladenburg (DE)**

(72) Erfinder : **Wahl, Friedrich**
**Im Wirbel 61**
**W-6800 Mannheim (DE)**
Erfinder : **Maurer-Rothmann, Andrea, Dr.**
**Siegfriedstrasse 14**
**W-6940 Weinheim (DE)**
Erfinder : **Merkenich, Karl, Dr.**
**Am Rimbacher Weg 13**
**W-6149 Fürth/Fahrenbach (DE)**

(74) Vertreter : **Grussdorf, Jürgen, Dr. et al**
**Patentanwälte Zellentin & Partner**
**Rubensstrasse 30**
**D-67061 Ludwigshafen (DE)**

## Beschreibung

Gegenstand der vorliegenden Erfindung ist ein verbessertes Verfahren zur Herstellung einer wässrigen Suspension von Hydroxylapatit aus Calciumhydroxid oder Calciumoxid und Phosphorsäure, bei der eine wässrige Lösung bzw. Suspension der Calcium-Verbindung durch Zugabe von Phosphorsäure bis zu einem Calcium/Phosphor-Molverhältnis von 10:6 zur Reaktion gebracht wird, wobei man den Reaktionsverlauf und das Erreichen des Endpunktes der Reaktion durch die Leitfähigkeit der Lösung bzw. Suspension bestimmt.

Hydroxylapatit ($Ca_5(OH)(PO_4)_3$), im folgenden auch als HAP bezeichnet, wird in großem Umfang in Zahnputzmitteln, als Knochenersatzstoff und als Trägermaterial in der Arzneimittelindustrie verwendet. Die Herstellung des in Wasser sehr schwer löslichen Produktes erfolgt üblicherweise durch Ausfällen wässriger Lösungen oder Suspensionen von Calciumverbindungen, wie Calciumhydroxid, Calciumcarbonat oder Calciumchlorid, mit einer stoechiometrischen Menge von Phosphorsäure oder einem löslichen Phosphat bei pH-Werten zwischen 9,5 und 11. Aus wirtschaftlichen Gründen ist dabei das bevorzugte Verfahren die Umsetzung von gebranntem Kalk in wässriger Suspension mit einer möglichst hochkonzentrierten Phosphorsäure gemäß der folgenden Reaktion

$$5\ Ca(OH)_2 + 3\ H_3PO_4 \rightarrow [Ca_5(OH)(PO_4)_3] + 9\ H_2O.$$

Problematisch an dieser Reaktion ist, daß einerseits die Konzentration der Kalkmilch nur schwer exakt bestimmbar ist, da dieses als technisches Produkt normalerweise nicht genau definiert ist und beispielweise wechselnde Calciumcarbonat und Wasseranteile enthält und andererseits beim Ausfällen des Hydroxylapatits leicht nicht umgesetztes Calciumhydroxid mitgerissen wird oder durch einen Überschuß an Phosphorsäure Tricalciumphosphat als Verunreinigung mitgefällt wird. Ferner ist es wünschenswert, daß der Hydroxylapatit als feinteilige Suspension anfällt und nicht durch zu rasches Ausfällen klumpig anfällt, da nur dann eine einwandfreie Weiterverarbeitung gewährleistet ist.

Diese feinteilige Suspension ist allerdings nicht oder nur schwer filtrierbar, so daß daraus trockene Pulver durch Sprühtrocknung oder in Vakuumtrocknern gewonnen werden müssen. Alle in der Lösung enthaltenen Verunreinigungen werden dadurch in das Endprodukt überführt. Es ist daher notwendig, von möglichst reinen Ausgangsprodukten auszugehen und die Reaktion genau bis zum theoretischen Endpunkt zu führen.

Aus der US-A- 4 324 772 ist es bekannt, daß ein feinteiliger Hydroxylapatit hergestellt werden kann, indem man unter starkem Rühren in eine etwa 30 %-ige Kalkmilch 80 %-ige Phosphorsäure einleitet, bis ein pH-Wert von 9,5 bis 11, insbesondere 10 bis 11, und vorzugsweise 10,5, erreicht wird, und anschließend in einer zweiten Stufe durch weitere Phosphorsäurezugabe der pH-Wert auf 7,0 bis 7,4, vorzugsweise 7,2 bis 7,3 eingestellt wird. Auf diese Weise wird in der ersten Stufe nur eine Umsetzung zwischen 70 und 90 % erreicht und erst in der zweiten Stufe die Reaktion vollendet, wodurch ein feinteiliger Hydroxylapatit erhalten wird. Die Kontrolle des pH-Werts und der Rührgeschwindigkeit wird dabei als außerordentlich kritisch bezeichnet, da durch geringe Abweichung vom pH-Wert von 10,5 oder unvollkommenes Rühren leicht Calciumhydroxid in das ausfallende Produkt eingeschlossen werden kann und dann beim weiteren Versetzen mit Phosphorsäure nicht mehr reagiert. Die genaue Einhaltung der pH-Bedingung erweist sich dabei als schwierig, da die pH-Messung in der erhaltenen Suspension sehr schwierig ist. Weiterhin ist die zweistufige Verfahrensweise nicht wirtschaftlich.

Aus dem US-A- 4 274 879 ist ein kontinuierliches Verfahren zur Herstellung von Hydroxylapatit bekannt, bei dem eine etwa 20 %-ige Kalkmilch mit einer 90 %-igen Phosphorsäurelösung bei Temperaturen von 80 bis 85° C und einem kontrollierten pH-Wert von 9,5 bis 10,5 umgesetzt wird, wobei in ca. 1 Stunde Verweilzeit in einem Durchflußreaktor ein Hydroxylapatit mit "weniger als 5 % Orthophosphat" (richtiger: β-Tricalciumphosphat) entsteht. Auch hier ist die genaue pH-Messung problematisch und das entstehende Produkt für viele technische Prozesse nicht brauchbar.

Es bestand daher die Aufgabe, ein einfacheres, besser kontrollierbares Verfahren zur Herstellung von reinem Hydroxylapatit zu finden.

Die Lösung dieser Aufgabe wird durch die in dem Patentanspruch 1 beschriebenen Maßnahme gegeben und durch die in den Unteransprüchen aufgeführten Maßnahmen gefördert.

Erfindungsgemäß wird Calciumhydroxid oder Calciumoxid (gebrannter Kalk, CaO) in Wasser zu einer 20 bis 40 %-igen (Gew/Vol) Suspension aufgeschlämmt und in einem Mischkessel mit kühl- und heizbarem Mantel bzw. entsprechendem Thermostatisierschlangen vorgelegt. In diese Suspension wird portionsweise oder kontinuierlich die Phosphorsäure als 60 bis 85 %-ige wässrige Säure im Verlauf von 1 bis 5 Stunden zugefügt. Der Verlauf der Reaktion und das Erreichen des Endpunktes wurde einerseits entsprechend dem Stand der Technik anhand der pH-Werte der Lösung und andererseits anhand der Leitfähigkeiten erfindungsgemäß gemessen. Beide Werte wurden durch gleichzeitiges Messen der Temperatur korrigiert.

Soweit ein besonders feinteiliger Hydroxylapatit erwünscht ist, hat es sich als vorteilhaft erwiesen, einen Teil der Reaktionsmasse laufend aus dem Mischgefäß abzuziehen, beispielsweise über einen Ablauf im Boden, und über eine geeignete Mühle, beispielsweise eine Perlmühle, zusätzlich zu zermahlen. Dieser Teilstrom kann gleichzeitig natürlich auch noch zur Durchführung der pH- und Leitfähigkeitsmessungen dienen. Es ist natürlich auch möglich, diese Messungen in einem gesonderten Teilstrom oder direkt im Reaktionsgefäß durchzuführen.

Die Reaktion wird bei einer Temperatur von 40 bis 90° C, vorzugsweise 50 bis 80° C durchgeführt, wobei wegen der hohen Wärmetönung der Neutralisationsreaktion das Mischgefäß entsprechend gekühlt werden muß.

Die erhaltene Suspension wird dann in an sich bekannter Weise getrocknet, beispielsweise durch Sprühtrocknen, Vakuumtrocknen, um den Hydroxylapatit als trockenes feines Pulver zu erhalten, oder, beispielsweise als Zusatz für Zahnpasten, als Suspension stabilisiert, indem man der erhaltenen wässrigen Suspension eine dem Feststoff etwa entsprechende Menge Glycerin oder ein anderes Stabilisierungsmittel zusetzt. Da üblicherweise die Suspension einen höheren Feststoffgehalt aufweisen soll (30-50%), als er bei der erfindungsgemäßen Umsetzung anfällt (15-35%), wird das Wasser soweit verdampft, daß der Feststoff die gewünschte Konzentration erreicht. In dieser Form ist die Suspension noch gut fließ- und rührfähig und damit verarbeitbar.

| Figur 1 | zeigt das Reaktionsschema der Reaktion von Phosphorsäure mit Calciumhydroxid und eine schematische Vorrichtung zur Durchführung der Reaktion. |
| Figur 2 | zeigt den Verlauf der pH-Werte und Leitfähigkeitswerte beim Versetzen einer Calciumhydroxidsuspension mit Phosphorsäure. |
| Figur 3 | zeigt den Verlauf der pH-Werte und Leitfähigkeitswerte beim Versetzen einer Phosphorsäurelösung mit Calciumhydroxid. |

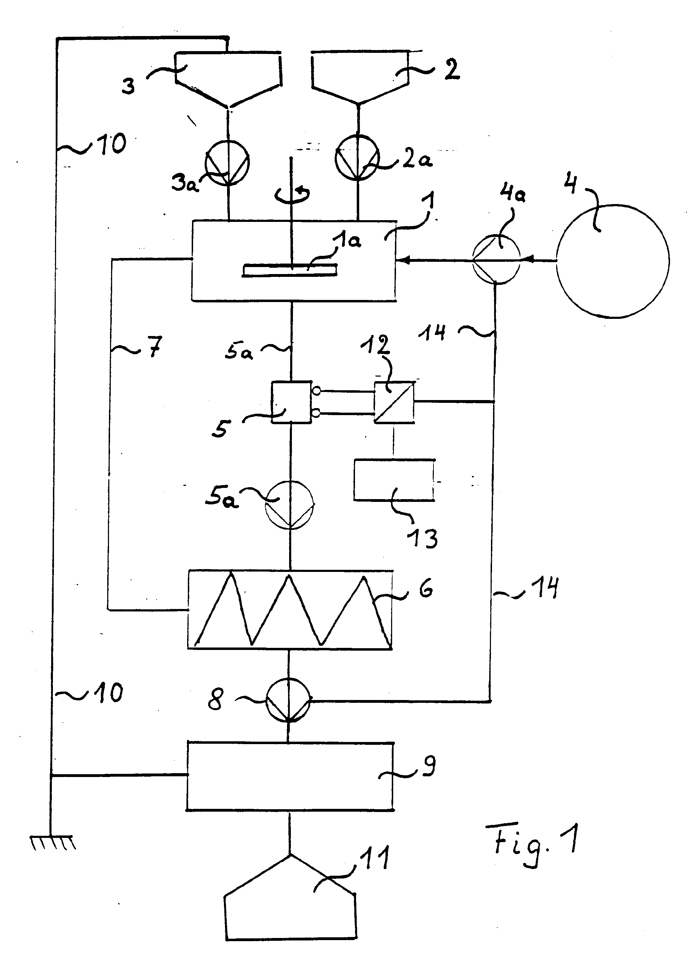

In der **Figur 1** wird zur Herstellung von Hydroxylapatit in einen Reaktionsbehälter 1 Calciumhydroxid aus einem Vorratsbehälter 2 und Wasser aus einem Reservoir 3 eingefüllt und mit Phosphorsäure aus einem Vorratsbehälter 4 versetzt. Die Suspension wird laufend über eine Meßzelle 5, in welcher der pH-Wert, die Leitfähigkeit und die Temperatur der Suspensionen gemessen werden, in eine Mühle 6 abgelassen und über eine Rücklaufleitung 7 nach der Vermahlung wieder in das Reaktionsgefäß 1 zurückgepumpt. Nach Beendigung der Reaktion wird die Suspension über eine Leitung 8 in eine Zentrifuge 9 geleitet und das Wasser weitgehend abgetrennt und entweder über eine Leitung 10 in den Vorratsbehälter 3 zurückgeleitet oder verworfen. Der feste Rückstand von Hydroxylapatit wird getrocknet und in einen Sammelbehälter 11 überführt. Auf diese Weise werden pulvriger Hydroxylapatit und Wasser erzeugt.

Mit 1a ist ein in dem Reaktor angebrachtes Rühraggregat bezeichnet, mit 2a, 3a und 4a die jeweils mit Ventilen bzw. Fördervorrichtungen versehenen Zuleitungen der Vorratsgefäße zum Reaktionsbehälter. Vom Reaktionsbehälter wird ein Teil der Suspension über eine Förderleitung und eine Pumpe 5a durch eine Meßzelle 5 zu der Mühle 6 geleitet. Die Sensoren der Meßzelle 5 geben ihre Meßdaten an ein Meßwerterfassungsgerät 12 weiter, welches die Daten einerseits über einen Schreiber 13 registriert und andererseits über Steuerleitungen 14 die Regelvorrichtungen 4a und 8 steuert. Sobald die Leitfähigkeit in der Meßzelle 5 einen vorbestimmten Wert unterschreitet, wird über die Steuerleitung 14 die Dosiervorrichtung 4a geschlossen und die Förderleitung 8 geöffnet, wodurch die Suspension auf die Fest-Flüssig-Trennvorrichtung 9 (beispielsweise eine Schubzentrifuge oder ein Trockner) gegeben wird, von dem der Wasseranteil über die Förderleitung 10 zum Vorratsgefäß 3 zurückgeführt oder verworfen wird und der Feststoff gegebenenfalls nach einer zusätzlichen Trocknung in den Vorratsbehälter 11 überführt wird.

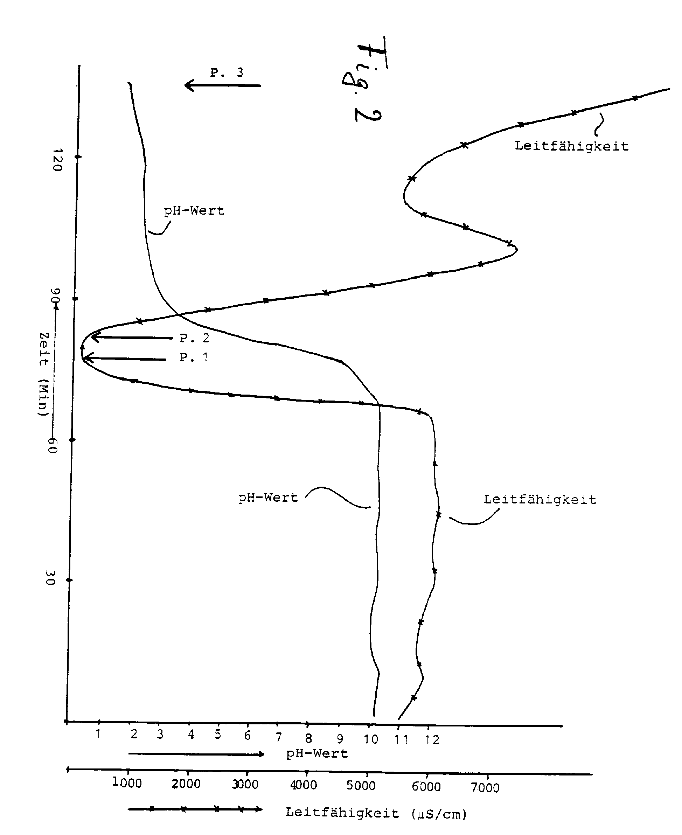

In der **Figur 2** ist der Verlauf der pH-Werte und Leitfähigkeiten wiedergegeben, der entsteht, wenn die Phosphorsäurezugabe am Äquivalenzpunkt nicht abgebrochen, sondern mit gleicher Zugabegeschwindigkeit fortgesetzt wird.

Wie die beigefügten Kurven, in denen pH-Wert und Leitfähigkeit jeweils temperaturkorrigiert sind (Figur 2), zeigen, fällt dabei der pH-Wert im Anfangsbereich sehr langsam ab und unterliegt nahe dem Äquivalenzpunkt sehr starken Zugabeschwankungen. Der Ausgangsbereich liegt dabei um etwa pH 10 und fällt in der Nähe des Äquivalenzpunktes langsam auf 7,5 ab. Ein scharfer Endpunkt ist dabei nicht festzustellen. Bei weiterer Phosphorsäurezugabe fällt der pH-Wert zunächst rasch auf 2,5-3 ab und geht dann langsam auf den pH-Wert einer verdünnten Phosphorsäure über.

Die Leitfähigkeit nimmt demgegenüber im Anfangsbereich zwischen etwa 6000 und auf 5000 $\mu$S/cm ab, um dann schlagartig am Äquivalenzpunkt auf unter 100 $\mu$S/cm abzusinken. Das Leitfähigkeitsminimum entspricht exakt dem Äquivalenzpunkt und ist sehr gut zu beobachten, so daß diese Meßmethode für die Verfahrenssteuerung wesentlich besser einzusetzen ist. Bei weiterer Phosphorsäurezugabe steigt die Leitfähigkeit zunächst langsam wieder an, wobei offensichtlich durch Bildung von Tricalciumphosphat Phosphorsäure teilweise verbraucht wird und somit die Leitfähigkeit sich nicht erhöht, bis nach Erreichen einer Phosphorsäurekonzentration, die einer Leitfähigkeit von ca. 7000 $\mu$S/cm entspricht, Dicalciumphosphat gebildet wird, was sich durch ein weiteres Leitfähigkeitsminimum bemerkbar macht.

3

Während der Reaktion werden Proben entnommen und das ausgefallene Produkt diffraktometrisch untersucht. In der Tabelle 1 sind repräsentative Reflexe von drei Proben wiedergegeben, welche am Leitfähigkeitsminimum (P1), am Neutralpunkt (P2) (pH 7,0 entsprechend US-A- 4 324 772) und nach Beendigung der Phosphorsäure-Zugabe (P3) entnommen werden.

Probe 1 erweist sich gemäß dem Diffraktogram der Tabelle 1 als reiner Hydroxylapatit. Probe 2 ist gemäß Tabelle 1 bereits mit ca. 20 % Tricalciumphosphat verunreinigter Hydroxylapatit und Probe 3 gemäß Tabelle 1 reines Dicalciumphosphat.

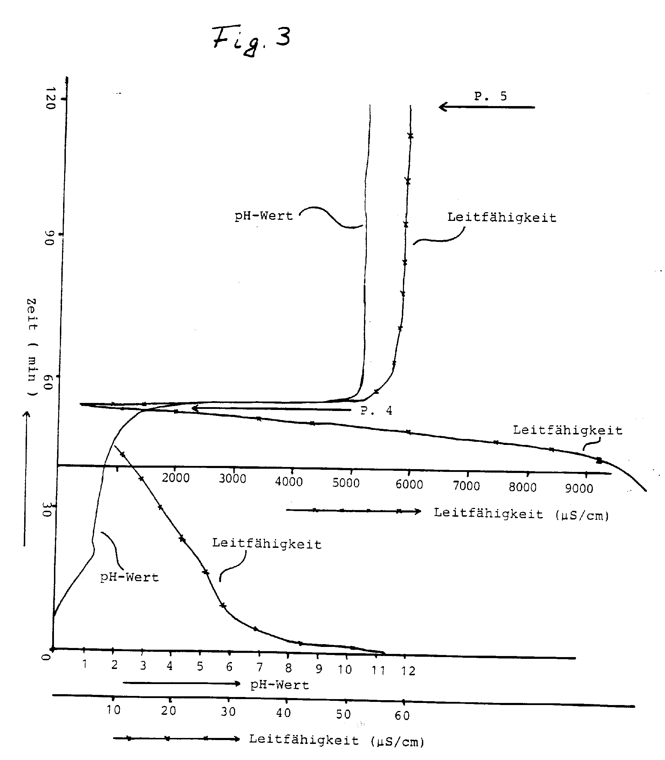

In der **Figur 3** ist der Verlauf der pH-Werte und Leitfähigkeiten wiedergegeben, wenn kontinuierlich Calciumhydroxidsuspension zur Phosphorsäurelösung zugegeben wird.

Der pH-Wert der Phosphorsäure nimmt dabei von unter 1 langsam auf ca. 3 zu und steigt dann, während Dicalciumphosphat ausfällt, rasch auf ca. 10 an, um sich danach nicht mehr zu ändern.

Die Leitfähigkeit fällt dementsprechend zunächst langsam von ca. 50 000 µS/cm auf 9 000 µS/cm ab, um in der Nähe des Äquivalenzpunktes für Dicalciumphosphat rasch auf ca. 150 µS/cm abzufallen und nach Durchlaufen desselben ebenso rasch wieder auf ca. 5 000 µS/cm anzusteigen. Danach steigt sie langsam weiter bis auf 6 000 µS/cm an. Eine im Minimum entnommene Probe 4 erweist sich als praktisch reines Dicalciumphosphat (vgl. Diffraktogram in Tabelle 1), eine im Plateau entnommene Probe 5 als Gemisch aus Dicalciumphosphat, Calciumoxid und Tricalciumphosphat (vgl. Diffraktogram Tabelle 1). Hydroxylapatit wird auf diese Weise nicht gebildet. Leitfähigkeitsbestimmung und pH-Messung sind jedoch gleichermaßen geeignet, um die Herstellung von reinem Dicalciumphosphat zu überwachen.

In den folgenden Versuchen ist das erfindungsgemäße Verfahren näher beschrieben.

## Beispiel 1

In ein Mischgefäß mit einem Fassungsvermögen von 500 l, welches über einen Doppelmantel mit Dampf zu beheizen oder mit Wasser zu kühlen ist, und einen Flügelrührer, welcher stufenlos regelbar ist, enthält, werden 253,98 kg Wasser vorgelegt und 75,24 kg Calciumhydroxid-Pulver portionsweise zugemischt. Die Homogenisierung der Mischung erfolgt außer durch den eingebauten Rührer noch dadurch, daß ein Teil der Suspension über einen Ablauf im Boden des Mischgefäßes abgenommen und über eine Perlmühle mit ca. 26 l Volumen und einem Rührwerk aus Butylkautschukscheiben mit Siliquarzperlen (Durchmesser 1,0 bis 1,5 mm) und eine Rücklaufleitung zum Mischgefäß umgepumpt wird. Nach vollständiger Zudosierung und Homogenisierung des Calciumhydroxids wird portionsweise 82 %-ige Phosphorsäure zudosiert und dabei die Suspension kontinuierlich weiter über die Perlmühle umgepumpt und gemahlen. Der Verlauf der Reaktion wird dabei in der zwischengeschalteten Meßzelle, in welcher pH-Wert, Leitfähigkeit und Temperatur gemessen werden, automatisch verfolgt.

Durch Thermostatisierung des äußeren Mantels wird die Temperatur im Mischgefäß während der ganzen Reaktion in einem Bereich von 50 bis 70°C gehalten.

Nach Erreichen des Leitfähigkeitsminimums von 150 µS/cm wird die Phosphorsäurezugabe unterbrochen. Zur Vervollständigung der Reaktion wird die Suspension noch 30 Minuten weiter umgepumpt und auf Temperatur gehalten.

Nach beendeter Reaktion wird der Mischbehälter verschlossen und durch Anlegen eines schwachen Vakuums und Außenheizung in einen Trockner umfunktioniert. Der abgeführte Wasserdampf wird noch in einem Staubfilter entstaubt und danach kondensiert und mengenmäßig bestimmt (300 kg).

Auf diese Art und Weise werden 100 kg Hydroxylapatit-Pulver erhalten, welches im Röntgendiffraktogram keine Verunreinigungen von β-Tricalciumphosphat (β-TCP) zeigt.

Im Gegensatz dazu zeigt ein entsprechender Hydroxylapatit, bei dem die Endpunktsbestimmung aufgrund des pH-Wert-Abfalls auf Werte unter 8 durchgeführt wurde, im Röntgendiffraktogram deutliche Banden (bei 27,8°, 31,0°, 34,4°), deren Intensität die Anwesenheit von mindestens 20 % β-Tricalciumphosphat anzeigt.

## Beispiel 2

Alternativ zu der in Beispiel 1 beschriebenen Trocknung kann die Suspension zunächst mit 100 kg Glycerin versetzt und auf einen Wassergehalt von ca. 100 kg eingedampft werden, wodurch man eine stabile, rührfähige und verarbeitbare Suspension erhält. Die Korngrößenverteilung in der so erhaltenen Suspension entspricht der folgenden Tabelle 2.

## Tabelle 1

| Δ·2Ω | P.1 | P.2 | P.3 | P.4 | P.5 | Substanz |
|------|------|------|------|------|------|----------|
| 26,4 | - | - | 17,0 | 17,0 | - | DCP |
| 27,8 | - | 2,8 | - | - | 3,3 | β-TCP |
| 30,1 | - | - | 11,3 | 12,5 | - | DCP |
| 31,0 | - | 5,5 | - | - | 6,0 | β-TCP |
| 31,7 | 13,8 | 9,3 | - | - | - | HAP |
| 32,1 | 10,8 | 6,6 | - | - | 6,0 | HAP/CaO |
| 32,7 | - | - | 6,7 | 7,2 | - | DCP |
| 32,9 | 8,7 | 5,5 | - | - | - | HAP |
| 34,4 | - | 3,7 | - | - | 4,0 | β-TCP |
| 37,3 | - | - | - | - | 13,2 | CaO |

## Tabelle 2

### Korngrößenverteilung von HAP (µm)

| von | bis | % |
|------|------|------|
| 118 | 33,7 | 0,1 |
| 33,7 | 23,7 | 0,5 |
| 23,7 | 17,7 | 1,9 |
| 17,7 | 13,6 | 0,8 |
| 13,6 | 10,5 | 7,9 |
| 10,5 | 8,2 | 5,2 |
| 8,2 | 6,4 | 4,3 |
| 6,4 | 5,0 | 10,2 |
| 5,0 | 3,9 | 10,4 |
| 3,9 | 3,0 | 11,4 |
| 3,0 | 2,4 | 11,9 |
| 2,4 | 1,9 | 6,3 |
| 1,9 | 1,5 | 4,3 |
| 1,5 | 1,2 | 8,3 |
| 1,2 | 0 | 16,5 |

**Patentansprüche**

1. Verfahren zur Herstellung einer wässrigen Suspension von Hydroxylapatit aus Calciumhydroxid oder Calciumoxid und Phosphorsäure, wobei eine wässrige Lösung bzw. Suspension der Calcium-Verbindung vorgelegt und unter Rühren langsam Phosphorsäure bis zu einem Ca/P Mol-Verhältnis von 10:6 zugemischt wird, **dadurch gekennzeichnet**, daß man den Reaktionsverlauf und das Erreichen des Endpunkts der Reaktion durch die Leitfähigkeit der Lösung bzw. Suspension bestimmt.

2. Verfahren nach Anspruch 1, **dadurch gekennzeichnet,** daß die Zumischung der Phosphorsäure beendet wird, nachdem die Leitfähigkeit unter 10%, vorzugsweise unter 5%, des Ausgangswertes abgefallen ist.

5

**3.** Verfahren nach Anspruch 1, **dadurch gekennzeichnet,** daß der wässrigen Suspension des gebildeten Hydroxylapatits, bezogen auf die Menge des Hydroxylapatits, ein Stabilisierungsmittel zugesetzt und die Suspension bis zur Endkonzentration eingedampft wird.

**4.** Verfahren nach einem der Ansprüche 1 bis 3, **dadurch gekennzeichnet,** daß die wässrige Suspension anschließend mit Phosphorsäure auf einen pH-Wert von 7,0 bis 7,5 eingestellt wird.

## Claims

**1.** Process for the production of an aqueous suspension of hydroxylapatite from calcium hydroxide or calcium oxide and phosphoric acid, whereby an aqueous solution or suspension of the calcium compound is taken and, with stirring, phosphoric acid is slowly admixed up to a Ca/P mol ratio of 10:6, characterised in that one determines the course of the reaction and the achievement of the end point of the reaction by the conductivity of the solution or suspension.

**2.** Process according to claim 1, characterised in that the admixing of the phosphoric acid is ended after the conductivity has fallen to below 10%, preferably below 5% of the initial value.

**3.** Process according to claim 1, characterised in that to the aqueous suspension of the hydroxylapatite formed, referred to the amount of the hydroxylapatite, is added a stabilising agent and the suspension is evaporated to the end concentration.

**4.** Process according to one of claims 1 to 3, characterised in that the aqueous suspension is subsequently adjusted with phosphoric acid to a pH value of 7.0 to 7.5.

## Revendications

**1.** Procédé de préparation d'une suspension aqueuse d'hydroxyapatite a partir d'hydroxyde de calcium ou d'oxyde de calcium et d'acide phosphorique, dans lequel une solution ou suspension aqueuse du compose de calcium est mise en oeuvre et est additionnée, lentement, sous agitation, d'acide phosphorique jusqu'à un rapport molaire Ca/P de 10/6, caractérisé en ce qu'on détermine le déroulement de la réaction et l'obtention du point final de la réaction par la conductibilité de la solution ou suspension.

**2.** Procédé suivant la revendication 1, caractérisé en ce que l'addition de l'acide phosphorique est achevée après que la conductibilité est tombée en dessous de 10 %, de préférence en dessous de 5 %, de la valeur de départ.

**3.** Procédé suivant la revendication 1, caractérisé en ce qu'un agent stabilisant est ajouté a la suspension aqueuse de l'hydroxyapatite formée, par rapport a la quantité de l'hydroxyapatite, et en ce que la suspension est évaporée jusqu'à la concentration finale.

**4.** Procédé suivant l'une des revendications 1 à 3, caractérisé en ce que la suspension aqueuse est ensuite ajustée a une valeur de pH de 7,0 à 7,5 par de l'acide phosphorique.

Fig. 1

Fig. 2

Fig. 3